# EUROPÄISCHE PATENTSCHRIFT

(11) **EP 2 148 135 B1**
(45) Veröffentlichungstag und Bekanntmachung des Hinweises auf die Patenterteilung: **01.05.2013**
(21) Anmeldenummer: 08013434.9
(22) Anmeldetag: 25.07.2008
(51) Int. Cl.: F23G 5/02, F23G 5/16, C10J 3/66

(54) **Verfahren und Vorrichtung zur thermischen Behandlung von Abfallgütern**
Method and device for thermal processing of waste material
Procédé et dispositif destinés au traitement thermique de déchets

(43) Veröffentlichungstag der Anmeldung: 27.01.2010
(73) Patentinhaber: Litesso-Anstalt, 9497 Triesenberg (LI)
(72) Erfinder: Kiss, Günter Hans, 28040 Lesa (IT)
(74) Vertreter: Pfenning, Meinig & Partner GbR

(56) Entgegenhaltungen:
- DE-A1- 4 308 551
- DE-A1- 4 325 689
- DE-A1- 4 327 320

## Beschreibung

Die vorliegende Erfindung betrifft ein Verfahren zur thermischen Behandlung von Abfallgütern aller Art, bei dem die Abfälle einer Hochtemperaturbehandlung mit Sauerstoff bei Temperaturen von über 1000 °C unterzogen werden, wobei die organischen Müllbestandteile vergast werden. Das dabei entstehende Synthesegas wird dem Hochtemperaturreaktor ungekühlt und ungereinigt entnommen und im Anschluss daran oxidiert. Die dabei entstehende thermische Energie des Abgases wird weiter thermisch genutzt. Ebenso wird eine entsprechende Vorrichtung zur thermischen Behandlung von Abfällen aller Art beschrieben.

In den Patentschriften DE 41 30 416 C1 und UA 41 263 C2 wird ein Verfahren zur Entsorgung und Nutzbarmachung von Abfällen aller Art beschrieben, bei dem unsortierter, unbehandelter, beliebige Schadstoffe in fester und/oder flüssiger Form enthaltender Industrie-, Haus- und Sondermüll sowie Industriegüterwracks einer Temperaturbeaufschlagung unterzogen werden.

Aus der DE 43 08 551 ist eine Einrichtung und ein Verfahren zur thermischen Entsorgung von Abfall bekannt, wobei der Abfall in einer Schweltrommel verschwelt wird und dabei Schwelgas und fester Schwelreststoff anfallen. Das Schwelgas wird in einer Brennkammer verbrannt und der Schwelreststoff wird in einer Trennvorrichtung in eine grobe und eine feine Fraktion aufgeteilt.

Die DE 43 27 320 betrifft ebenso eine Einrichtung und ein Verfahren zur thermischen Entsorgung von Abfall, wobei die Einrichtung eine Presse für den Abfall, einen beheizbaren Entgasungskanal für die thermische Umsetzung des Abfalls in Feststoffe und Schwelgase und einen nachgeschalteten Hochtemperatur-Reaktor umfasst, aus dem eine Schmelze austragbar ist, zur Vergasung des Feststoffs in Synthesegase, eine Kühleinrichtung und eine Reinigungseinrichtung für Gase.

Diese aus dem Stand der Technik bekannten Entsorgungsverfahren haben jedoch den Nachteil, dass ein wesentlicher Teil der gewonnenen Energie beim Schockkühlen (Quenchen) des Synthesegases verloren geht.

Somit ist es Aufgabe der vorliegenden Erfindung, ein verbessertes Entsorgungsverfahren der oben genannten Art anzugeben, mit der ein möglichst hoher Anteil der Energie genutzt werden kann.

Diese Aufgabe wird bezüglich des Verfahrens mit den Merkmalen des Patentanspruchs 1 gelöst. Dabei stellen die abhängigen Ansprüche vorteilhafte Weiterbildungen dar.

Erfindungsgemäß wird somit ein Verfahren zur thermischen Behandlung von Abfällen aller Art bereitgestellt, bei dem die Abfälle einer Hochtemperaturbehandlung mit Sauerstoff und/oder mit Sauerstoff angereicherter Luft bei einer Temperatur von über 1000 °C unterzogen werden, wobei die organischen Müllbestandteile vergast, die anorganischen Müllbestandteile geschmolzen, das ungekühlte, ungereinigte Synthesegas oxidiert und das dabei gewonnene Abgas thermisch genutzt wird.

Die Abfälle werden unter Beibehaltung ihrer Misch- und Verbundstruktur zunächst komprimiert, um das Hohlraumvolumen zu minimieren. Die entstehenden Kompaktpakete werden in einen von außen beheizten länglichen Kanal gepresst, wobei sich ein gasdichter Pfropfen vor dem Kanaleingang bildet, der Schleusenfunktion wegen seiner Gasundurchlässigkeit übernimmt.

Die Kompaktpakete werden bei sich aufbauendem Gasdruck nur so lange in kraftschlüssigem Kontakt mit den heißen Kanalwandungen gehalten, bis die mitgeführten Flüssigkeiten und leicht flüchtigen Stoffe verdampft und vorhandene Rückstellkräfte einzelner Komponenten aufgehoben sind und bis die mitgeführten organischen Bestandteile zumindest teilweise Bindemittelfunktion übernommen haben. Nach kurzer Verweilzeit des Entsorgungsguts im beheizten Kanal entsteht ein kompakter Formstrang, in dem die mit dem Abfallgut eingebrachten Feinanteile und Stäube gebunden werden. Es entstehen somit staubfreie, form- und strukturstabile brockige Konglomerate, die anschließend in einer bevorzugten Ausführungsform in den Schacht eines Hochtemperaturvergasers oder Hochtemperaturreaktors fallen und eine gasdurchlässige, staubfreie Bettschüttung bilden.

Durch Zugabe von Sauerstoff werden die organischen Bestandteile vergast. Aufgrund der hierbei entstehenden Vergasungstemperatur werden in der Schmelzzone des Hochtemperaturreaktors bei Temperaturen von bis zu 2000 °C unterhalb der Schüttung die anorganischen Bestandteile, d.h. alle Gläser, Metalle und sonstige Minerale, aufgeschmolzen. Die abgezogene Schmelze kennzeichnet sich bei unsortiert zugeführtem Abfallgut jedoch noch durch eine weitgehend inhomogene Struktur. Höherschmelzende Komponenten, beispielsweise Kohlenstoff aber auch bestimmte Metalle liegen noch in ihrem festen Aggregatzustand vor und bilden Einschlüsse, so dass eine sinnvolle Verwertung dieser schlackeartigen Restprodukte nicht möglich ist.

Die in schmelzflüssiger Form vorliegenden Restprodukte werden daher bevorzugt einer zusätzlichen Nachbehandlung unterworfen, indem sie einem thermischen Homogenisierungsprozess unterzogen werden. Hierbei wird die Schmelze in oxidierender Atmosphäre so lange geläutert, bis eine homogene Hochtemperaturschmelze vorliegt, so dass selbst Langzeiteluierbarkeit ausgeschlossen ist.

Der Hochtemperaturreaktor kennzeichnet sich dadurch, dass er über die Gesamtheit seines Volumens auf wenigstens 1000 °C gehalten wird.

Die gasförmigen und festen Abfallgüter bleiben so lange einer Hochtemperaturbeaufschlagung unterworfen, bis alle thermisch reagierbaren Schadstoffe sicher zerstört und langkettige Kohlenwasserstoffe gecrackt sind. Dadurch wird die Bildung von Kondensaten, wie Teeren und Ölen, zuverlässig verhindert.

Erfindungsgemäß wird nun vorgeschlagen, das so hergestellte, über 1000 °C heiße, ungekühlte und ungereinigte Synthesegas einer energetischen Nutzung zuzuführen.

Durch die vorliegende Erfindung wird die durch die Vergasung der Abfälle mit reinem Sauerstoff gewonnene Energie optimal genutzt. Dieses Verfahren stellt darüber hinaus - verglichen mit dem Stand der Technik - nicht nur eine wesentliche Vereinfachung dar, es führt auch zu einer signifikanten Reduzierung der spezifischen Investitions- und Betriebskosten. Durch die erzielten Energieeinsparungen ist das erfindungsgemäße Verfahren auch unter ökologischen Aspekten deutlich vorteilhaft.

Die gasförmige Phase besteht aus dem durch die Vergasung der organischen Müllbestandteile gewonnenen Synthesegas und dem Wasserdampf, der vor allem auf die im Müll enthaltene Feuchte zurückzuführen ist. Da die gasförmige Phase den Hochtemperaturreaktor mit einer Temperatur von ca. 1000 °C verlässt, ist in dieser heißen gasförmigen Phase thermische Energie gebunden. Zusätzlich verfügt das Synthesegas mit seinen brennbaren Bestandteilen über chemische Energie.

Wird die gasförmige Phase durch Kaltwasserinjektion auf < 100 °C schockgekühlt, wie dies bisher im Stand der Technik gemacht wird, geht die gesamte thermische Energie der gasförmigen Phase verloren. Nur die im Synthesegas gebundene chemische Energie kann genutzt werden.

Mit der vorliegenden Erfindung wird somit nicht nur die im Synthesegas gebundene chemische Energie, sondern auch die thermische Energie der gesamten gasförmigen Phase genutzt werden, indem zunächst das ungekühlte und ungereinigte Synthesegas oxidiert, bevorzugt leicht überstöchiometrisch verbrannt wird. Dieser Oxidationsschritt wird dabei vorzugsweise in mindestens einer Brennkammer durchgeführt, die separat, d.h. außerhalb des Hochtemperaturreaktors, angeordnet ist. Es fällt dabei dann ein heißes Abgas an, so dass die gasförmige Phase aus heißem Wasserdampf und heißem Abgas aus der Verbrennung des Synthesegases besteht. In dieser heißen gasförmigen Phase ist ausschließlich thermische Energie gebunden.

Die in der gasförmigen Phase gebundene thermische Energie wird in einem Abhitzekessel vorzugsweise zur Dampferzeugung eingesetzt. Der produzierte Dampf, dessen Druck vorzugsweise über 50 bar betragen sollte, kann zur Stromproduktion in einer Dampfturbine oder als Wärmeträger, beispielsweise als Fernwärme, eingesetzt werden.

Die gasförmige, abgekühlte Phase, die aus dem Abhitzekessel abgeführt wird, wird einem Reinigungsverfahren nach dem Stand der Technik unterzogen, um die in der gasförmigen Phase vorhandenen Schadstoffe, wie Schwefel-, Chlor- und Stickstoffverbindungen, Schwermetalle, Stäube, organische Verbindungen usw., zu binden und auszuschleusen.

In einer vorteilhaften Ausführungsform wird die durch die Innenkühlung des Hochtemperaturreaktors abgeführte thermische Energie im Abhitzekessel genutzt.

Erfindungsgemäß wird ein Teilstrom des dem Hochtemperaturreaktor entnommenen ungekühlten, ungereinigten Synthesegases einer Schockkühlung unterzogen und anschließend gereinigt. Hierbei wird wie im Stand der Technik bekannt vorgegangen. Dabei wird das über 1000 °C heiße Synthesegasgemisch unmittelbar nach Verlassen des Hochtemperaturreaktors durch Kaltwasserinjektion schockartig auf unter 100 °C gekühlt werden. Die im Gasstrom mitgeführten Flüssigkeits- und Feststoffpartikel werden vom Kühlwasser aufgenommen.

Das gekühlte vorgereinigte Synthesegas wird anschließend auch einer mehrstufigen Reinigung unterzogen. Das so gewonnene Synthesereingas, bestehend aus Wasserstoff, Kohlenmonoxid und Kohlendioxid, kann anschließend energetisch oder stofflich genutzt werden. Diese Ausführungsform ist insbesondere dann vorteilhaft, wenn Synthesegas von hoher Qualität zu chemischen Synthesen weiter verwendet werden soll, so dass beispielsweise auch die Produktion von Kraftstoffen zugänglich ist. Erfindungsgemäß wird das so gewonnene gereinigte Synthesegas zur thermischen Behandlung der Abfälle rückgeführt.

Eine nicht erfindungsgemäße Vorrichtung zur thermischen Behandlung von Abfällen aller Art umfassent mindestens eine Niedertemperaturstufe und mindestens eine Hochtemperaturstufe, wobei die Niedertemperaturstufe in Form eines horizontalen Kanals ausgebildet ist, der unterbrechungslos in einen Hochtemperaturreaktor mündet, sowie mindestens eine mit dem Gasausgang des Hochtemperaturreaktors verbundene Brennkammer und mindestens einem nachgeschalteten mindestens einstufigen Abhitzekessel.

Hierbei ist es vorteilhaft, wenn der Abhitzekessel mit mindestens einer Dampfturbine und einem nachgeschalteten Generator verbunden ist.

In einer weiteren nicht erfindungsgemäßen Ausführungsform ist vorgesehen, dass zwischen dem Gasausgang des Hochtemperaturreaktors und der Brennkammer eine Gasabzweigung vorgesehen ist, die mit einer nachgeschalteten Schockkühlung (Quench) und einer Gasreinigung verbunden ist.

Gegenüber konventionellen Müllheizkraftwerken weist die Erfindung folgende Vorteile auf:
- Die Temperatur der gasförmigen Phase am Gasausgang des Hochtemperaturreaktors liegt mit ca. 1000 °C signifikant über der Rauchgastemperatur einer Müllverbrennungsanlage, die in der Regel unter 800 °C liegt, so dass die spezifische thermische Energie der gasförmigen Phase wesentlich größer ist.
- Die Verbrennung des homogenen Synthesegases erfolgt leicht überstöchiometrisch, während die konventionelle Müllverbrennungsanlage mit einem wesentlich höheren Luftüberschuss gefahren werden muss, damit der extrem heterogene Müll möglichst vollständig verbrannt werden kann. Die spezifische Rauchgasmenge (Nm³/t) einer Müllverbrennungsanlage liegt daher wesentlich über der spezifischen Abgasmenge der vorliegenden Erfindung. Die notwendigen Komponenten der Gasreinigung sind entsprechend kleiner auszulegen.
- Darüber hinaus ist die spezifische Schadstoffbelastung bei der Verbrennung des heterogenen Mülls wesentlich größer als die spezifische Schadstoffbelastung bei der Verbrennung des homogenen Synthesegases.

Wird die gesamte in der gasförmigen Phase gebundene thermische und chemische Energie genutzt, um beispielsweise den gewonnenen Dampf in einer Dampfturbine zu verstromen, liegt die Stromausbeute signifikant über der Strommenge, die durch Einsatz des Synthesegases in einem Gasmotor oder in einer Gasturbine erzielt werden kann. Da das vorgeschlagene Verfahren zu einer spürbaren Reduzierung des Systemstromverbrauchs führt, ergibt sich eine wesentliche Erhöhung des Stromüberschusses, der an das Netz abgegeben werden kann.

Werden beispielsweise in einer Vergasungsanlage, die dem Stand der Technik entspricht, 10 t/h Abfälle mit einem Heizwert von 12 MJ/kg sowie zum Anfahren und zur Aufrechterhaltung des Vergasungsprozesses 60 Nm³/t Erdgas eingesetzt, beträgt der gesamte Energieeintrag 39,3 MW. Wird das vorgeschlagene Verfahren eingesetzt, wird eine nutzbare Energie von 36,8 MW (= 93,6 % des gesamten Energieeintrags) gewonnen. Bei einem Wirkungsgrad des Abhitzekessels von 85 % und einem Wirkungsgrad der Dampfturbine von 29 %, können 9,1 MW Strom (= 23,2 % des gesamten Energieeintrags) produziert werden. Nach Abzug des SystemStromverbrauchs verbleibt ein Stromüberschuss von 6,1 MW (= 15,5 % des gesamten Energieeintrags).

Werden zur Verstromung des Synthesegases die bekannten Verfahren eingesetzt, die dem Stand der Technik entsprechen, können folgende Stromüberschüsse erreicht werden:
- Dampfkessel/Dampfturbine: 1,1 MW (= 2,8 %),
- Gasturbine: 2,2 MW (= 5,6 %),
- Gasmotor: 3,1 MW (= 7,9 %).

Die höhere Stromausbeute und die niedrigeren spezifischen Investitions- und Betriebskosten begründen die wirtschaftliche Überlegenheit des vorgeschlagenen Verfahrens.

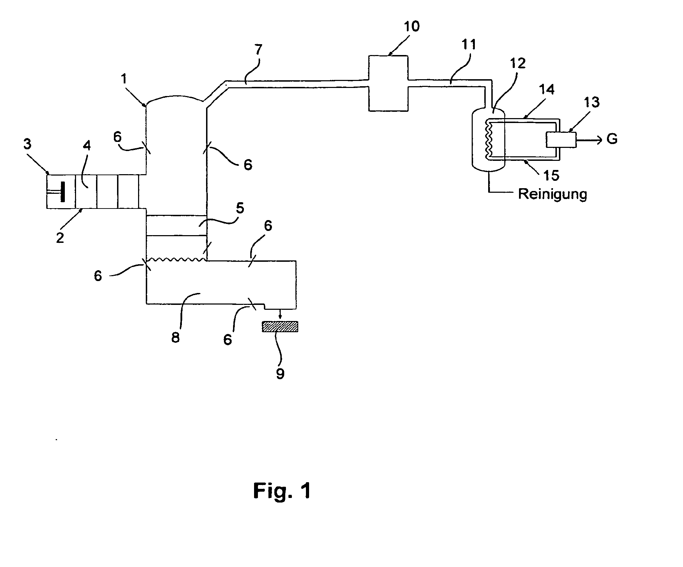

Die Erfindung wird nachfolgend anhand der Figur 1 näher erläutert.

Figur 1 zeigt eine Ausführungsform des erfindungsgemäßen Verfahrens, bei dem die Hochtemperaturbehandlung in einem Hochtemperaturreaktor 1 durchgeführt wird, der als senkrechter zylindrischer Reaktor ausgebildet ist. Der Hochtemperaturreaktor 1 ist dabei unterbrechungslos unmittelbar mit einem Schubkanal 2 verbunden. Durch die Verdichterpresse 3 wird der zugeführte Abfall verdichtet und durch den Schubkanal 2 geschoben. Die dabei sich bildenden Kompaktpakete 4 werden sich bei aufbauendem Gasdruck nur so lange in kraftschlüssigem Kontakt mit der heißen Kanalwandung gehalten, bis die mitgeführten Flüssigkeiten und leicht flüchtigen Stoffe verdampft und vorhandene Rückstellkräfte einzelner Komponenten aufgehoben sind und bis die mitgeführten organischen Bestandteile zumindest teilweise Bindemittelfunktion übernommen haben. Im Endeffekt entstehen dabei dann staubfreie, form- und strukturstabile brockige Konglomerate. Die Temperatur im Schubkanal 2 der unter Sauerstoffabschluss betrieben wird, übersteigt dabei die Temperaturen von 600 °C nicht.

Die vorstehend beschriebenen Kompaktpakete 4 werden dann im Bereich der Eintrittsöffnung in dem Hochtemperaturreaktor 1 extrem hoher Strahlungshitze ausgesetzt. Die hiermit verbundene plötzliche Expansion von Restgasen und Schwelgut führt zu dessen stückiger Zerteilung. Das so erhaltene Feststoff-Stückgut bildet dann im Hochtemperaturreaktor 1 ein gasdurchlässiges Bett 5, in dem der Kohlenstoff des Schwelgutes mit Hilfe von Lanzen 6, die mit Brenngas, wie Sauerstoff, sauerstoffangereicherter Luft oder auch weiteren Brenngasen betrieben wird, zunächst zu CO₂ bzw. CO verbrannt. Die oberhalb des Bettes 5 den Reaktor 10 verwirbelt durchströmenden Schwelgase werden vollständig gecrackt. Zwischen Kohlenstoff, CO₂, CO und dem aus dem Abfall ausgetriebenen Wasserdampf stellt sich ein temperaturbedingtes Reaktionsgleichgewicht bei der Synthesegasbildung ein. Dieses Rohsynthesegas wird dann über die Rohsynthesegasleitung 7 abgeführt.

Unterhalb des Vergasungsbettes 5 werden in dem Hochtemperaturreaktor in dem bis zu 2000 °C heißen Kammbereich des Bettes 5 die mineralischen und metallischen Bestandteile des Schwelgutes aufgeschmolzen. Die Schmelzen treten direkt in einen Nachbehandlungsreaktor 8 ein, indem sie mit Hilfe weiterer Lanzen 6, die mit Sauerstoff betrieben werden, einer Homogenisierung bei mehr als 1400 °C unterzogen werden. Letztlich wird dann diese so homogenisierte Schmelze in ein Wasserbad 9 eingebracht. Der vorstehend beschriebene Verfahrensablauf und die Vorrichtung entsprechen dabei im Wesentlichen dem schon aus dem Stand der Technik bekannten sog. "Thermoselect-Verfahren". Hierzu wird z.B. auf die EP 1 203 060 B1 bzw. auf die bereits eingangs genannte DE 41 30 416 C1 verwiesen.

Erfindungswesentlich ist nun, dass das aus dem Hochtemperaturreaktor 1 über die Synthesegasleitung 7 abgeführte ungereinigte und ungekühlte Synthesegas mit einer Temperatur über 1000 °C in mindestens eine Brennkammer 10 geführt wird. In dieser Brennkammer wird nun eine Oxidation vorgenommen. Es wird dabei so gearbeitet, dass eine leicht überstöchiometrische Verbrennung erfolgt. Als Ergebnis fällt dabei nun eine heiße gasförmige Phase an, die aus heißem Wasserdampf und den heißen Abgasen aus der Verbrennung des Synthesegases besteht. In dieser heißen gasförmigen Phase ist nur noch ausschließlich thermische Energie gebunden. Über eine weitere Gasleitung 11 wird nun diese wie vorstehend beschriebene heiße gasförmige Phase in einen Abhitzekessen 12 geführt. Im Abhitzekessel wird Dampf produziert, der zu einer Dampfturbine 13 geführt wird. Mit 14 ist dabei die heiße Seite und mit 15 die kalte bezeichnet. Die Dampfturbine 13 kann dabei mit einem Generator (G) zur Stromerzeugung verbunden sein.

Das den Abhitzekessen 12 verlassende abgekühlte Gas kann dann zu einer Gasreinigung geführt werden, um vorhandene Schadstoffe, wie Schwefel, Chlor und Stickstoffverbindungen, Schwermetalle, Stäube und organische Verbindungen zu binden und auszuschleusen.

Die in Figur 1 beschriebene Ausführungsform kann auch dahingehend abgewandelt werden, dass aus dem Hochtemperaturreaktor 1, und zwar hier aus dem Bereich unterhalb des Vergasungsbettes 5, die im Hochtemperaturreaktor 1 vorhandene Innenkühlung, die in der Wandung des Hochtemperaturreaktors 1 eingebracht sein kann, gleichfalls noch in den Abhitzekessel 12 geführt wird. Dadurch kann eine nochmalige Verbesserung der Energieausbeute erreicht werden.

## Patentansprüche

1. Verfahren zur thermischen Behandlung von Abfällen aller Art, bei dem die Abfälle einer Hochtemperaturbehandlung mit Sauerstoff und/oder mit Sauerstoff angereicherter Luft bei einer Temperatur von über 1000 °C unterzogen werden, wobei die organischen Müllbestandteile vergast, die anorganischen Müllbestandteile geschmolzen, das ungekühlte, ungereinigte Synthesegas oxidiert und das dabei gewonnene Abgas thermisch genutzt wird,
wobei die Hochtemperaturbehandlung in einem Hochtemperaturreaktor (1) durchgeführt wird,
**dadurch gekennzeichnet, dass** ein Teilstrom des dem Hochtemperaturreaktor (1) entnommenen ungekühlten, ungereinigten Synthesegases einer Schockkühlung (Quench) unterzogen und anschließend gereinigt und das so gewonnene, gereinigte Synthesegas zur thermischen Behandlung der Abfälle rückgeführt wird.

2. Verfahren nach Anspruch 1, **dadurch gekennzeichnet, dass** das ungekühlte, ungereinigte Synthesegas aus dem Hochtemperaturreaktor (1) abgeführt und mindestens in einer separaten Brennkammer (10) oxidiert wird.

3. Verfahren nach einem der vorhergehenden Ansprüche, **dadurch gekennzeichnet, dass** die thermische Energie in einem Abhitzekessel (12) zur Dampfproduktion eingesetzt wird.

4. Verfahren nach vorhergehendem Anspruch, **dadurch gekennzeichnet, dass** der gewonnene Dampf zur Stromgewinnung genutzt wird.

5. Verfahren nach Anspruch 3, **dadurch gekennzeichnet, dass** der Dampf als Wärmeträger, zum Beispiel als Fernwärme genutzt wird.

6. Verfahren nach einem der Ansprüche 3 bis 5, **dadurch gekennzeichnet, dass** die im Abhitzekessel (12) abgekühlten Abgase einer Reinigung unterzogen werden.

7. Verfahren nach einem der vorhergehenden Ansprüche, **dadurch gekennzeichnet, dass** die aus dem Hochtemperaturreaktor (1) abgeführte thermische Energie zusätzlich im Abhitzekessel (12) energetisch genutzt wird.

## Claims

1. Method for thermal processing of waste materials of all types, in which the waste materials are subjected to high-temperature processing with oxygen and/or air enriched with oxygen at a temperature of above 1,000°C, the organic waste components being gasified, the inorganic waste components being melted, the non-cooled, unpurified synthesis gas being oxidised and the thereby recovered waste gas being used thermally, the high-temperature processing being implemented in a high-temperature reactor (1),
**characterised in that** a partial flow of the non-cooled, unpurified synthesis gas which is removed from the high-temperature reactor (1) is subjected to a shock cooling (quench) and subsequently purified, and the thus recovered, purified synthesis gas is recycled for thermal processing of the waste materials.

2. Method according to claim 1, **characterised in that** the non-cooled, unpurified synthesis gas is removed from the high-temperature reactor (1) and oxidised at least in one separate combustion chamber (10).

3. Method according to one of the preceding claims, **characterised in that** the thermal energy is used in a waste heat boiler (12) for steam production.

4. Method according to the preceding claim, **characterised in that** the recovered steam is used for current production.

5. Method according to claim 3, **characterised in that** the steam is used as heat-transfer medium, for example as long-distance energy.

6. Method according to one of the claims 3 to 5, **characterised in that** the waste gases which are cooled in the waste heat boiler (12) are subjected to purification.

7. Method according to one of the preceding claims, **characterised in that** the thermal energy which is removed from the high-temperature reactor (1) is used energetically in addition in the waste heat boiler (12).

## Revendications

1. Procédé de traitement thermique de déchets de toute nature, selon lequel les déchets sont soumis à un traitement à haute température avec de l'oxygène et/ou avec de l'air enrichi d'oxygène à une température supérieure à 1 000 °C, dans lequel les composants organiques des déchets sont gazéifiés, les composants inorganiques des déchets sont mis en fusion, le gaz de synthèse non refroidi non purifié s'oxyde et l'effluent gazeux obtenu à cette occasion est utilisé thermiquement, dans lequel le traitement à haute température est mis en oeuvre dans un réacteur à haute température (1), **caractérisé en ce qu'**un flux partiel du gaz de synthèse non refroidi non purifié, prélevé dans le réacteur à haute température (1), est soumis à un refroidissement brusque (trempe) et est ensuite purifié, et le gaz de synthèse purifié ainsi obtenu est remis en circulation pour le traitement thermique des déchets.

2. Procédé selon la revendication 1, **caractérisé en ce que** le gaz de synthèse non refroidi non purifié est évacué hors du réacteur à haute température (1) et est oxydé dans au moins une chambre de combustion (10) séparée.

3. Procédé selon l'une quelconque des revendications précédentes, **caractérisé en ce que** l'énergie thermique est introduite dans une chaudière de récupération (12) pour la production de vapeur.

4. Procédé selon la revendication précédente, **caractérisé en ce que** la vapeur obtenue est utilisée pour la production d'électricité.

5. Procédé selon la revendication 3, **caractérisé en ce que** la vapeur est utilisée en tant qu'agent caloporteur, par exemple pour le chauffage urbain.

6. Procédé selon l'une quelconque des revendications 3 à 5, **caractérisé en ce que** les effluents gazeux refroidis dans la chaudière de récupération (12) sont soumis à une purification.

7. Procédé selon l'une quelconque des revendications précédentes, **caractérisé en ce que** l'énergie thermique évacuée hors du réacteur à haute température (1) est de plus utilisée sur le plan énergétique dans la chaudière de récupération (12).
